# EUROPEAN PATENT APPLICATION

(11) **EP 4 818 703 A1**
(43) Date of publication of application: **07.10.2026**
(21) Application number: 25167517.9
(22) Date of filing: 31.03.2025
(51) Int. Cl.: G01P 3/486, G01D 5/34, G01D 5/347

(54) **SENSOR UNIT**

(71) Applicant: HaslerRail AG, 3018 Bern (CH)
(72) Inventor: Schildhauer, Toni, 99099 Erfurt (DE); Winzer, Andreas, 98693 Ilmenau (DE); Mitrenga, Dennis, 99610 Sömmerda (DE); Ribaux, Stephan Edouard, 3148 Lanzenhäusern (CH); Hummel, Sascha, 77694 Kehl (DE); Schreiner, Thorsten, 35578 Wetzlar (DE)
(74) Representative: Keller Schneider Patent- und Markenanwälte AG

(57) **Abstract**

A sensor unit comprises at least one LED light source (110) for generating measuring light, at least two photo detectors (130.1...6), in particular photodiodes, and a conductor arrangement connected to the at least two photo detectors (130.1...6) providing external access to at least two measurement channels. The at least one LED light source (110), the at least two photo detectors (130.1...6) and the conductor arrangement are arranged on a semiconductor chip (100), and the at least two photo detectors (130.1...6) and the conductor arrangement are arranged in such a way that the at least two measurement channels are galvanically separated. The sensor unit may be used in a rotation speed sensor, in connection with an encoder disk to be attached to a rotating object, the rotation speed of which is to be determined.

## Description

### Technical field

The invention relates to a sensor unit and a rotation speed sensor comprising such a sensor unit.

### Background art

In many applications, sensors for reliably and precisely measuring linear or rotational speeds are required. One approach are photoelectric speed sensors. They include a light emitter forming a light beam, an encoder object that is linked to a component the speed of which is to be determined and which is designed to reflect or to interrupt the light beam, as well as a light receiver, which receives light reflected by the encoder object or the light of the light beam that has not been blocked by the encoder object.

In particular, for sensing rotational speeds, e. g. the speed of a vehicle axis, the encoder object may be an encoder disk featuring reflective or transmissive structures along its circumference. Based on the signal obtained from the light receiver, the rotational speed of the encoder disk may be determined.

In order to reliably and precisely measuring speeds in a large speed range, it is preferred to have an encoder disk with small-scale structures. At the same time, several measurement channels are required to allow for the determination of the direction of movement, to improve reliability and achieve a fail-safe system. This applies in particular to highly safety relevant applications, e. g. in the field of speed sensing for train protection systems.

To provide information about the direction of movement, the signals must be in a fixed phase relationship. This has been traditionally solved by using several physically separated sensor units along a measuring body. Each unit needs to be manually adjusted (calibrated) with respect to the other units. This makes assembly, installation and maintenance of these sensors costly. Additionally, due to the large physical footprint of this design, the number of sensor channels and the achievable resolution by miniaturizing the structures on the encoder were limited.

### Disclosure of the invention

The object of the invention is to provide a sensor unit for a speed sensor allowing for a high resolution, a large number of measurement channels and minimizing manual calibration requirements.

The solution to the problem is defined by the features of claim 1. According to the invention, the sensor unit comprises:
a) at least one LED light source for generating measuring light;
b) at least two photo detectors, in particular photodiodes; and
c) a conductor arrangement connected to the at least two photo detectors providing external access to at least two measurement channels.

The at least one LED light source, the at least two photo detectors and the conductor arrangement are arranged on a semiconductor chip; and the at least two photo detectors and the conductor arrangement are arranged in such a way that the at least two measurement channels are galvanically separated.

In the context of the invention, various LED light sources may be used. Their wavelength is in particular in the range of 300-1'100 nm. Depending on the space available on the chip and the geometry of structures on an encoder disk (see below) the choice may be limited to LED light sources not exceeding a certain maximum footprint. In particular, LEDs emitting visible light in the green and blue regions are suitable: blue LEDs provide a high radiant flux, whereas silicon based photo detectors typically have a higher responsitivity for green light.

The creation of photodiodes on a semiconductor chip is a simple process. Therefore, photodiodes are cost-efficient and reliable. In addition, they have a very small latency. Other types of photo detectors may be used such as phototransistors, CMOS or CCD sensors or quantum point photo sensors.

Preferably, the at least one LED light source and the at least two photo detectors are integrated into the semiconductor chip monolithically, i. e. by processes such as microstructuring and photolithography. Alternatively, they are mechanically attached to the chip body. Hybrid approaches are possible as well, where some of the components are monolithic with the chip and others are mechanically attached.

Preferably, the conductor arrangement allows for directly connecting the photo detectors, e. g. the anode and cathode of each of the photodiodes. This ensures that the raw sensor data of each of the measurement channels is accessible from the outside.

In particular, the LED light source is galvanically separated from each of the at least two photo detectors. In principle, the measures discussed below, with respect to galvanic separation of the photo detectors may be applied to the galvanic separation of the LED light source as well.

In the context of this application, "galvanic separation" relates to the dielectric breakdown strength. Galvanic separation is achieved in particular if the breakdown voltage at which the specific resistance between the measurement channels drops below 10⁹ Ω·m is at least 1'500 VDC or 1000 VAC at 50/60 Hz. This property may be tested according to EN 50155:2017 chapter 13.4.9.3, where the test voltage is applied by gradually increasing the voltage amplitude to the test voltage and maintained at the specified level for 1 min. In particular, the requirements for galvanic separation stated above are fulfilled between all LED light sources and photo detectors as well as contact ports between the chip, the carrier PCB and a further interface PCB.

It has to be taken into account that fulfilling this requirement leads to a large safety margin in applications for the speed sensing of rolling stock (e. g. rail vehicles), as usual voltages ocurring are in the range of 72-125 VDC or 50-90 VAC (rms) at the typical nominal battery voltage of 100 VDC.

The inventive design allows for the integration of several measurement channels into one compact unit. Due to the galvanic separation, the photo detectors may be arranged close to each other, which does not only reduce the physical footprint of the unit but also allows for using an encoder with small-scale structures, thus improving the achievable resolution. In fact, neighbouring photo detectors may be arranged as closely as about 150 µm without the risk of crosstalks or other negative influences on the signals. Compared to the usual discretely designed sensor units, this allows for increasing the resolution by a factor of about 4 or more.

Due to integrating the light source as well as the photo detectors into one common chip, manual calibration is not needed and the phase distances between the measurement channels are reliably fixed for the lifetime of the sensor unit.

The sensor unit may be used in photoelectric speed sensors for various applications, including safety-relevant applications in in aerospace, rail transport and medical technology.

Preferably, the at least one LED light source is arranged on the semiconductor chip in at least a first chamber and the at least two photo detectors are arranged on the semiconductor chip in at least a second chamber separate from the first chamber. A wall separating the first chamber from the second chamber optically shields the at least two photo detectors from direct illumination by the at least one LED light source.

A chamber defines an accommodation space, which at least partially accommodates a component. Separate chambers define separate accommodation spaces for several components, wherein the accommodation spaces are not connected to each other. In particular, the components are arranged on a common support and the accommodation spaces of the separate chambers extend from the support up to a certain distance of the support, without any connection between the chambers in the volume defined between the upper surface of the support and the mentioned distance.

In particular, there are exactly two chambers and all LED light sources (one or several) are accommodated in the first chamber and all photo detectors are accommodated in the second chamber. This provides an optical shield between the LED light source(s) and the photodetectors. More than two chambers may be provided, e. g. in order to improve electrical properties of the sensor unit and/or to further shield the measurement light generated by two or more LED light sources.

Preferably, all the separate chambers are sealed by a light-transmissive high penetrating field strength sealing compound. The sealing compound ensures galvanic separation of the measurement channels. In addition, the sealing compound may improve the protection of the LED light sources and/or the photo detectors from external impacts by moisture, dust, dirt, etc. as well as from mechanical strain.

In the context of this application, a high penetrating field strength (dielectric strength) is in particular a field strength of at least 1kV/100µm.

Preferably, the sealing compound is transparent, i. e. does not substantially scatter the incoming light. Preferably, the compound is a silicone or epoxy resin material. Epoxy is smooth (uncreased) and thus insensible to dirt contaminants. Silicone is a bit rubbery and sensible to dirt contaminants, but exhibits less scattering of transmitted light.

Preferably, a surface of the sealing compound opposite to the at least one LED light source and/or to the at least two photo detectors is planar and parallel to a light emission surface of the respective LED light source and/or parallel to light entrance surfaces of the respective photo detectors.

A planar surface avoids lens-like effects on the light emitted by the LED light source, to illuminate the external reference as well as on the light received by the photo detectors.

Preferably, the upper surface matches a planar upper surface of a surrounding structure defining the chambers. In a particularly preferred embodiment, all the separate chambers are defined by continuous openings in a substrate with a constant cross-section and the sealing compound completely fills those openings, creating a planar surface matching the surrounding surface of the structure.

The planar surface of the sealing compound may be achieved by precise volumetric filling of the respective chamber, taking into account expected shrinkage during a drying process. Alternatively, excess material may be scraped off in the top region, using a suitable scraper or doctor blade.

In alternative embodiments, the surface of the sealing compound has a predetermined nonplanar geometry, e. g. the geometry of a lens or a prism, and the influence on the emitted and/or received light is taken into account when processing the sensor signals.

Preferably, the semiconductor chip is based on a silicon-on-insulator wafer and galvanic separation is obtained by surrounding an active sensor layer of each of the photo detectors by a surrounding region reaching down to an insulation layer.

Silicon on insulator (SOI) refers to the use of a multi-layered substrate in place of a conventional bulk silicon substrate. An insulator such as silicon dioxide (SiO₂), also known as a buried oxide layer (BOX layer), is supported by the (silicon) substrate. On top of the BOX layer, a thin layer of silicon is placed, wherein the semiconductor components such as diodes or transistors are created. The BOX layer isolates the components from the substrate. The full dielectric isolation of the devices reduces parasitic capacitance, thereby improving performance.

The surrounding region may be a localized trench or it may encompass essentially the entire surface outside the active sensor regions and conductor traces.

Preferably, a continuous dielectric cover layer extends over at least an active area of each of the photo detectors and metallization layers leading from the active area to contact areas arranged in a distance from the active area.

Preferably, the dielectric cover layer is an SiO2 layer. It may be easily obtained by chemical vapor deposition (CVD). Nevertheless, other dielectric materials may be used. The dielectric cover layer may extend over substantially the entire chip, subregions thereof or only the active areas and conductors.

In principle, two or three of the different measures for obtaining or improving galvanic separation, namely use of a high penetrating field strength sealing compound, surrounding the photo detectors by a region reaching down to an insulation layer and using a dielectric cover layer may be combined.

The measures described above substantially increase galvanic separation between the measurement channels as well as between the light source and the light detectors, without needing more spatial separation between the components. Accordingly, a high resolution and a large number of measurement channels may be achieved while ensuring a high dielectric breakdown strength.

Preferably, a light emission surface of the at least one LED light source is in a common plane with light entrance surfaces of the at least two photo detectors.

In the context of this application, the light emission surface and the light entrance surfaces are defined as lying in a common plane if the surfaces are parallel (relative angle < 5°) and if the distance between the heights of the centers of gravity of the surfaces, measured in a direction perpendicular to a predetermined set plane is less than 300 µm, in particular less than 200 µm.

This ensures that the phase relationship of the LED light source and the individual measurement channels is independent from the distance to an encoding reference arranged parallel to the light emission surface and the light entrance surface.

A preferred embodiment of the sensor unit comprises at least four photo detectors arranged along a straight line, defining at least four fixed phase measurement channels.

Having four or more measurement channels allows for a reliable determination of velocity at different speeds, provides redundancy and allows for detecting measurement errors based on mismatching measurements.

Preferably, the sensor unit comprises at least two LED light sources. Having two light sources provides redundancy and the determination of velocity is still possible even if one of the light sources fails. At the same time, failure of the light source may be detected based on a reduced light intensity at the photo detectors. Accordingly, an alert may be triggered, requesting the user to service or replace the sensor unit or rotation speed sensor.

In preferred embodiments, the at least two photo detectors are arranged along a first straight line and that the at least two LED light sources are arranged a second straight line oriented perpendicular to the first straight line. This arrangement makes sure that the phase relationship is the same for both light sources.

In other embodiments, the light sources are arranged along the first straight line, in particular at different positions on the first straight line. In this case, the separation of the light sources along the axis has to match the geometry of the encoder disk. However, using two light sources at different positions along the first straight line allows for analyzing further phase differences and thus to obtain even further information.

Even further embodiments feature only one single LED light source.

A rotation speed sensor comprises at least one sensor unit according to the invention, and an encoder disk to be attached to a rotating object, the rotation speed of which is to be determined. The sensor unit and the encoder disk are adapted to be arranged in a mutual relationship such that the measuring light emitted by the at least one LED light source falls on the encoder disk, structures on the encoder disk modulate a reflection of the light from the encoder disk and the modulated reflected light is detected by the at least two photo detectors.

Using a reflective encoder allows for integrating the sender (light source) and receiver (photo detectors) into the same chip. This reduces the costs and the total size of the speed sensor.

In particular, such a rotation speed sensor may be mounted onto the bearing cover of a wheel of a vehicle, e. g. a rail vehicle. The encoder disk is attached to a component rotating with the wheel. Thus, the rotational speed of the wheel may be reliably and directly measured.

Nevertheless, the sensor unit may be used in other applications, e. g. in connection with linear encoders.

In particular, the at least two measurement channels defined by the at least two photo detectors and the structures on the encoder disk define a plurality of fixed phase relationships.

Preferably, the fixed phase relationships are from the set of 0, 30°, 45°, 60°, 90°, 120°, 180°, 240°, 270°, 300° (+- 5°) or combinations thereof.

A preferred embodiment of the rotation speed sensor comprises a circular support, wherein at least two sensor units according to the invention are arranged along a circumference of the support, the at least two sensor units being arranged in a mutual relationship with the same encoder disk.

The sensor units may be modules and a suitable number of modules may be mounted to the support, depending on the specific requirements of the actual case.

Preferably, the analog signals delivered by the photo detectors are provided as such at external terminals of the speed sensor (or of a cable connected to the speed sensor), i. e. without preprocessing in the speed sensor itself. This reduces the number of electronical components in the speed sensor and thus of possible sources of error. Furthermore, the sensor's operating principle is fully transparent to the providers of the downstream components that further process the output of the speed sensor.

The LED light sources may be provided with optical screens and/or lenses to increase the steepness of the phase signal. The screens or lenses may be attached directly to the light source or arranged in a certain distance therefrom, in particular above the open surface of a chamber housing the light source.

The photo detectors may be provided with optical screens and/or lenses to increase the steepness of the phase signal. The screens or lenses may be attached directly to the photo detector or arranged in a certain distance therefrom, in particular above the open surface of a chamber housing the photo detector.

There may be a phase-independent measuring channel that allows for the detection of faulty sensor signals or illumination or a so-called monitoring diode may be used to trigger the switching threshold of the photo detectors of the measurement channels.

Two or more of the photo detectors may be interconnected on the chip in order to contribute to a common phase signal and/or in order to correct manufacturing or mounting tolerances of the encoder disk. However, in preferred embodiments, the signals of the photo detectors are directly accessible and provided at respective connections of the chip.

In principle, the measurement channels may feature different spectral sensitivities and/or the encoder disk features at least two spatially distant regions with different reflection characteristics. Both allows for obtaining further information, e. g. with respect to the direction of the rotation of the encoder disk. For instance, the encoder disk may feature periodic sequences of regions having at least three different reflection characteristics. This allows for an unambiguous determination of the direction of rotation.

The same sensor unit may be used in connection with different encoder, e. g. encoder disks. The phase angles with respect to a first encoder (e. g. 60° for photodiode n) may be different from the phase angles with respect to a second encoder (e. g. 45° for the same photodiode n).

Further advantageous embodiments and combinations of features of the invention result from the following exemplary embodiments and the set of patent claims as a whole.

### Brief description of the drawings

The drawings used to illustrate the exemplary embodiments show:
- Fig. 1A: a schematic side view of a speed sensor according to an embodiment of the invention;
- Fig. 1B: a schematic top view of a base part of the speed sensor;
- Fig. 1C: a schematic bottom view of an encoder disk of the speed sensor;
- Fig. 2A: a schematic top view on a sensor chip of the speed sensor;
- Fig. 2B: a cross-sectional view of the sensor chip in a vertical plane along line A-A in Fig. 2A;
- Fig. 3A: a top view on the light detector region of the sensor chip; and
- Fig. 3B: a cross-sectional view in a vertical plane along line B-B in Fig. 3A.

In general, identical parts are marked with the same reference symbols in the figures.

### Ways to carry out the invention

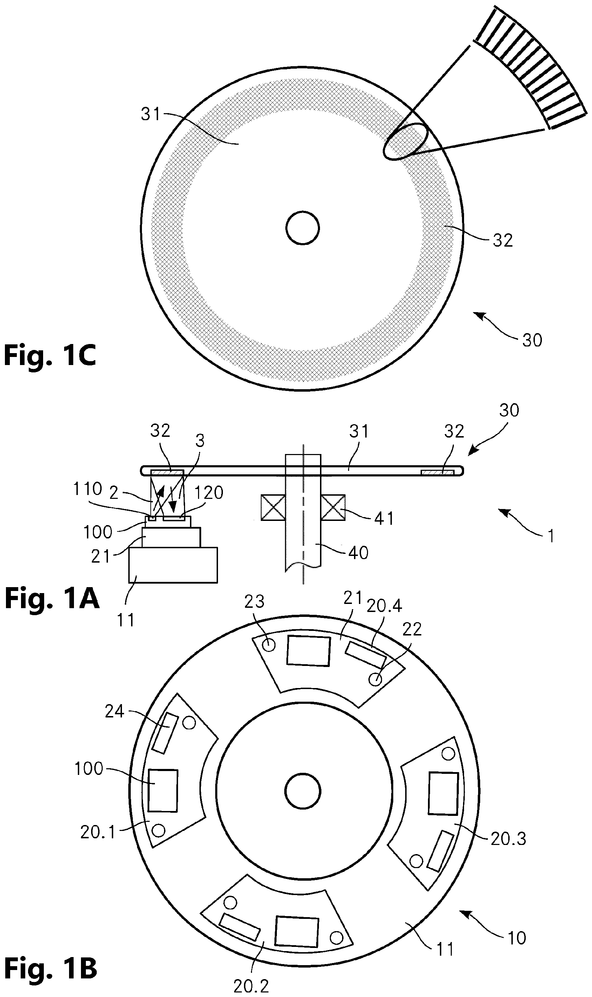

The Figures 1A, 1B, 1C show a speed sensor according to an embodiment of the invention. Figure 1A is a schematic side view of a speed sensor, Figure 1B is a schematic top view of a base part of the speed sensor, and Figure 1C is a schematic bottom view of an encoder disk of the speed sensor.

The speed sensor 1 includes a stationary base part 10 and an encoder disk 30, which is coupled to a rotating axis, the speed of which is to be measured. For this purpose, the encoder disk 30 is connected to an encoder shaft 40, which is supported in a shaft bearing 41. The encoder disk 30 includes a circular disk body 31, the bottom side of which is provided with reflective structures 32. In the shown example, these reflective structures 32 are radial lines arranged around the circumference of the disk body 31. The encoder disk 30 shown in Fig. 1A features 400 lines, however other embodiments with e. g. 200 or 800 lines are possible as well. A larger number of lines improves the precision of the speed measurements, in particular at low speeds. In the corresponding annular region of the bottom side of the disk body 31, between the reflective structures 32, areas are located that have a substantially lower reflectivity than the reflective structures 32.

The base part 10 of the speed sensor 1 includes an annular support structure 11. It supports four sensor modules 20.1...4, evenly distributed along the circumference of the top side of the base part 10. Each of the sensor modules 20.1...4 includes an arc-shaped support 21 which in turn supports a sensor chip 100 and a connector 24 (as well as further components, such as an interface PCB, power board, etc., arranged on the lower side of the sensor module 20.1...4 and thus not visible). Each of the supports 21 is attached to the base part 10 by fastening screws 22, 23.

The speed sensor 1 has a modular design. It can be operated with a single sensor module or two, three or four sensor modules that may mounted to the support structure 11 depending on the requirements.

The base part 10 and the encoder disk 30 are arranged in such a way that light emitted by a light source 110 integrated on the sensor chip 100 (illuminating light 2) falls onto the annular region of the bottom side of the encoder disk 30 which is provided with the reflective structures 32. It is reflected by these structures, and the reflected light 3 partially falls onto the light detector 120, which is as well integrated on the sensor chip 100. Due to the arrangement of the reflective structures 32, the light is modulated when the encoder disk 3 is rotated. Based on the corresponding signals, captured by several channels of the light detector 120 (see below), the rotational speed of the component the encoder shaft 40 is connected to may be reliably determined and monitored.

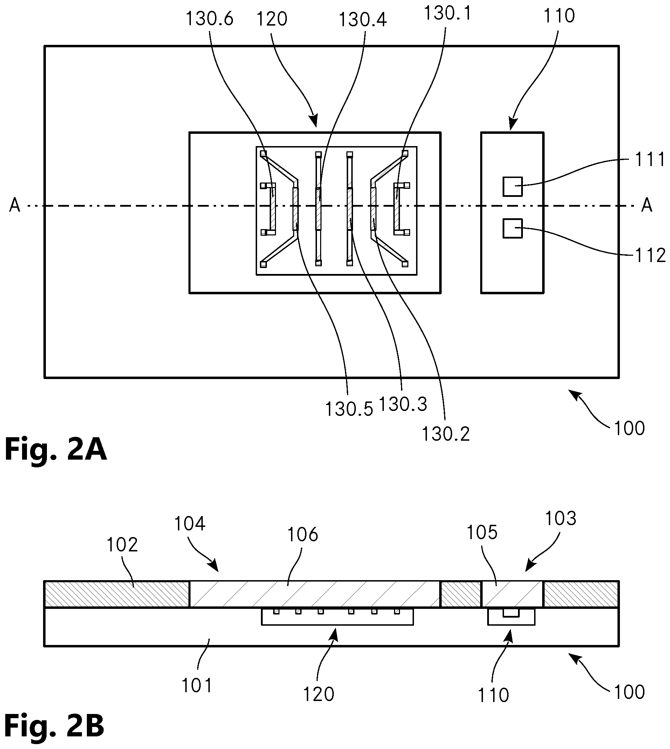

Figure 2A is a schematic top view on a sensor chip of the speed sensor, Figure 2B is a cross-sectional view of the sensor chip in a vertical plane along the line A-A in Figure 2A.

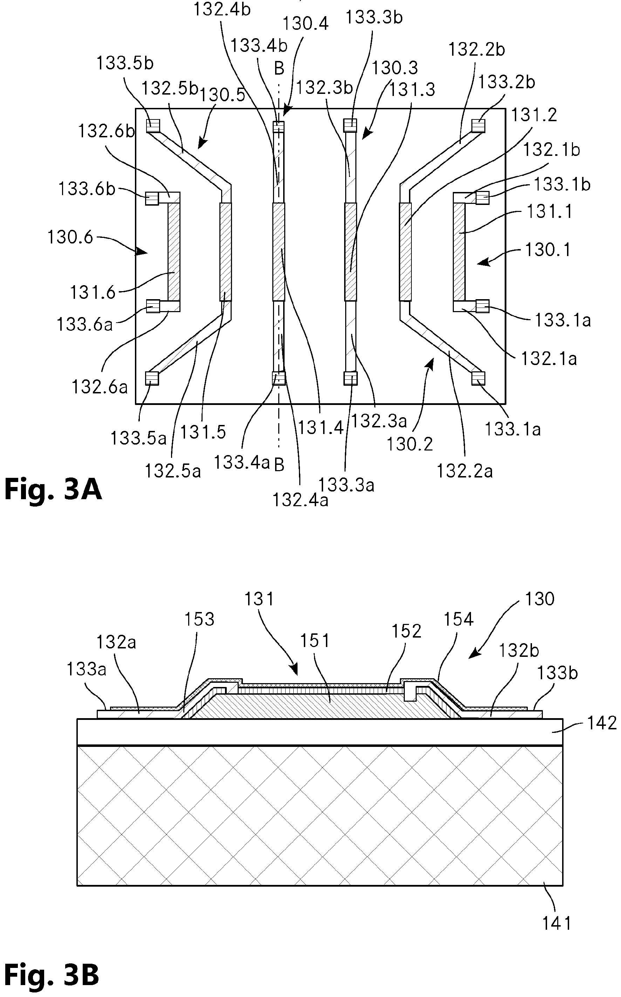

The sensor chip 100 features a light source 110 including two light-emitting diodes (LEDs) 111, 112. It further features a light detector 120 including six photo diodes 130.1...6, the active detection regions of which being line shaped, wherein the main extension of the detection regions runs in a direction perpendicular to a central axis A-A of the sensor chip 100 and wherein the detection regions are arranged in a distance from each other. The mutual distance of the detection regions of neighbouring photo diodes 130.1...6 is between about 180 µm and 250 µm. The light detector 12 is described in more detail below, in connection with Figures 3A, 3B.

The two LEDs 111, 112 of the light source 110 are arranged along a further line perpendicular to the central axis, symmetrically with respect to the central axis A-A. As can be seen from Figure 2B, the elements of the light source 110 and of the light detector 120 are integrated into a base printed-circuit board (PCB) 101, their active surfaces (light-emitting surfaces and light-detecting surfaces) being flush with the upper surface of the base PCB 101. The base PCB 101 is covered by an upper PCB 102. The latter features two rectangular prismatic windows 103, 104. The first window 103 basically matches the location and extension of the light source 110, and the second window 104 basically matches the location and extension of the light detector 120. The active surfaces of the light source 110 and of the light detector 120 have a certain distance to the inner walls of the upper PCB 102 in order not to obstruct illuminating light from the LEDs 111, 112 or reflected light to be detected by the photo diodes 130.1...6.

Both chambers defined by the windows 103, 104 have a height of about 1.5 mm. After connecting the LEDs 111, 112 and the light detector 120 with bond wires leading outside the space defined by the windows 103, 104, they are filled with an optically transparent epoxy resin. A suitable material is commercially available as "Vitralit^{®} 1527" from Panacol-Elosol GmbH, Steinbach, Germany. It is an epoxy-based material with 20 weight-% of SiO₂ filler and a particle size D90 of 40 nm. It has good optical properties and provides a dielectric breakdown strength of 1.5-2 kV/100µm. The corresponding fillings 105, 106 ("glob-top") completely fill these chambers, and the upper surface thereof is flush with the upper surface of the upper PCB 102. This is achieved by a volumetric filling process, where the resin volume is precisely adjusted to the volume of the respective chamber, taking into account the surface tension of the material as well as potential shrinkage due to the drying of the material after application. The planar upper surface ensures that the illuminating light and the reflected light do not experience substantial uncontrolled deflection or scattering.

Figure 3A is a top view on the light detector region of the sensor chip; and Figure 3B is a cross-sectional view in a vertical plane along line B-B in Fig. 3A. The light detector 120 includes six photo diodes 130.1...6. Each of the photo diode 130.1...6 features an active region 131.1...6 for detecting impinging light. The active regions 131.1...6 are line shaped with an aspect ratio of about 1:8. The main extension of the active regions 131.1...6 runs in a direction perpendicular to a central axis of the sensor chip 100. The active regions 131.1...6 are arranged in a first group 131.1, 131.2, 131.3 and in a second group 131.4, 131.5, 131.6, wherein the distance of adjacent active regions 131...6 within each of the groups has a first value. The distance between the innermost active regions 131.3, 131.4 is bigger, namely about 1.33-times the first value.

The distance of the active regions 131.1...6 is coordinated with the distance between adjacent lines on the encoder disk. The mutual distances between the active regions 131.1...6 is chosen in such a way that the following phase differences between the measuring channels are defined:

| **photo diode** | **phase** |
|---|---|
| 130.1 | 180° |
| 130.2 | 270° |
| 130.3 | 0° |
| 130.4 | 120° |
| 130.5 | 210° |
| 130.6 | 300° |

The extensions of the light detector 120 are about 2.5mm along the central axis of the sensor chip 100 and about 2.0mm in the perpendicular direction.

Each of the photo diodes 130.1...6 includes two lateral conductors 132.1a...6a, 132.1b...6b leading to contact surfaces 133.1a...6a, 133.1b...6b. These contact surfaces are designed to be connected by bond wires leading e. g. to terminals of the sensor chip 100 that are accessible from the outside of the chip.

The conductors 132.3a, 132.3b, 132.4a, 132.4b of the middle diodes run straight in an extension of the respective active region 131.3, 131.4 and end at the respective contact surface 133.3a, 133.3b, 133.4a, 133.4b. The conductors 132.1a, 132.1b, 132.6a, 132.6b of the outer photo diodes 130.1, 130.6 are also straight but run parallel to the central axis, ending at contact surfaces 133.1a, 133.1b, 133.6a, 133.6b in the vicinity of the longitudinal ends of the light detector region. Finally, the remaining conductors 132.2a, 132.2b, 132.5a, 132.5b run in an angle of about 45°, reaching their contact surfaces 133.2a, 133.2b, 133.5a, 133.5b arranged close to the corners of the light detector region.

The layer structure of a photo diode 130 is shown in Figure 3B. The chip 100 is of the silicon-on-insulator (SOI) type. It includes a base body 141, made from silicon. The entire upper surface of this base body 141 is covered by a SiO₂ layer, which constitutes a buried oxide (BOX) layer 142. The thickness of this layer is in the range of 2 - 5 µm to provide a high dielectric breakdown strength of about 1kV/µm or more. The photo diode 130 is constituted by a lower Si layer 151, which is n-doped. Above this lower Si layer 151, a p-doped upper Si layer 152 is coated. The end of a first conductor 132a (anode) reaches into the upper Si layer 152, whereas the end of second conductor 132b (cathode) reaches into the lower Si layer 151. Both conductors 132a, 132b are constituted by a metallization layer covering the upper Si layer 152 or the BOX layer 142, respectively.

The active region between the ends of the conductors 132a, 132b as well as most of the conductors 132a, 132b are covered by a transparent dielectric passivation layer 154 of SiO₂. This layer is obtained by plasma-enhanced chemical vapour deposition (CVD) on the structured substrate. The outer ends of the conductors 132a, 132b are uncovered to provide contact surfaces 133a, 133b.

Not all photo diodes 130.1...6 of the sensor chip need to be used for speed measurement. Depending on the application, only some of them are even connected. Furthermore, two or more photo diodes 130.1...6 may be directly connected in order to define specific channels. For instance, two or more photo diodes 130.1...6 may correspond to the same phase, and thus adding the respective signals improves the resilience against certain negative effects that might affect the individual signals. Some measurement channels may as well be used for cross-checking the results obtained on the basis of other channels.

The invention is not restricted to the described embodiment. In particular, the sensor modules may be smaller or larger, e. g. to include more measurement channels and/or to cooperate with an encoder disk having larger-scale structures. In the case of larger sensor modules, the base part of the speed sensor may be designed in such a way that it provides only 2 or 3 positions for mounting sensor modules.

The number and phase relationships of the measurement channels may be different from those of the described embodiment. Similarly, the layout of the light source(s) and the photo detectors on the chip may be chosen differently. The same applies to the semiconductor layer structure, where in particular several types of photodiodes may be used, such as p-n, PIN or avalanche (APD) photodiodes.

In summary, it can be stated that the invention provides a sensor unit for a speed sensor allowing for a high resolution, a large number of measurement channels and minimizing manual calibration requirements.

## Claims

1. Sensor unit, comprising
a) at least one LED light source for generating measuring light;
b) at least two photo detectors, in particular photodiodes;
c) a conductor arrangement connected to the at least two photo detectors providing external access to at least two measurement channels;
wherein the at least one LED light source, the at least two photo detectors and the conductor arrangement are arranged on a semiconductor chip; and
wherein the at least two photo detectors and the conductor arrangement are arranged in such a way that the at least two measurement channels are galvanically separated.

2. The sensor unit as recited in claim 1, **characterized in that** the at least one LED light source is arranged on the semiconductor chip in at least a first chamber and that the at least two photo detectors are arranged on the semiconductor chip in at least a second chamber separate from the first chamber, wherein a wall separating the first chamber from the second chamber optically shields the at least two photo detectors from direct illumination by the at least one LED light source.

3. The sensor unit as recited in claim 2, **characterized in that** all the separate chambers are sealed by a light-transmissive high penetrating field strength sealing compound.

4. The sensor unit as recited in claim 3, **characterized in that** a surface of the sealing compound opposite to the at least one LED light source and/or to the at least two photo detectors is planar and parallel to a light emission surface of the respective LED light source and/or parallel to light entrance surfaces of the respective photo detectors.

5. The sensor unit as recited in any of claims 1 to 4, **characterized in that** the semiconductor chip is based on a silicon-on-insulator wafer and **in that** galvanic separation is obtained by surrounding an active sensor layer of each of the photo detectors by a surrounding region reaching down to an insulation layer.

6. The sensor unit as recited in any of claims 1 to 5, **characterized in that** a continuous dielectric cover layer extends over at least an active area of each of the photo detectors and metallization layers leading from the active area to contact areas arranged in a distance from the active area.

7. The sensor unit as recited in any of claims 1 to 6, wherein a light emission surface of the at least one LED light source is in a common plane with light entrance surfaces of the at least two photo detectors.

8. The sensor unit as recited in any of claims 1 to 7, **characterized by** comprising at least four photo detectors arranged along a straight line, defining at least four fixed phase measurement channels.

9. The sensor unit as recited in any of claims 1 to 8, **characterized by** comprising at least two LED light sources.

10. The sensor unit as recited in claim 9, **characterized in that** the at least two photo detectors are arranged along a first straight line and that the at least two LED light sources are arranged a second straight line oriented perpendicular to the first straight line.

11. Rotation speed sensor, comprising
a) a sensor unit as recited in any of claims 1 to 10;
b) an encoder disk to be attached to a rotating object, the rotation speed of which is to be determined,
wherein the sensor unit and the encoder disk are adapted to be arranged in a mutual relationship such that the measuring light emitted by the at least one LED light source falls on the encoder disk, structures on the encoder disk modulate a reflection of the light from the encoder disk and the modulated reflected light is detected by the at least two photo detectors.

12. Rotation speed sensor as recited in claim 11, **characterized in that** the at least two measurement channels defined by the at least two photo detectors and the structures on the encoder disk define a plurality of fixed phase relationships.

13. Rotation speed sensor as recited in claim 11 or 12, comprising a circular support, wherein at least two sensor units as recited in any of claims 1 to 10 are arranged along a circumference of the support, the at least two sensor units being arranged in a mutual relationship with the same encoder disk.
